# EUROPÄISCHE PATENTSCHRIFT

(11) **EP 2 237 076 B1**
(45) Veröffentlichungstag und Bekanntmachung des Hinweises auf die Patenterteilung: **13.04.2011**
(21) Anmeldenummer: 09175885.4
(22) Anmeldetag: 13.11.2009
(51) Int. Cl.: G01V 8/14

(54) **Lichtschranke**
Light barrier
Barrière lumineuse

(30) Priorität: 09.12.2008 DE 102008061218
(43) Veröffentlichungstag der Anmeldung: 06.10.2010
(73) Patentinhaber: SICK AG, 79183 Waldkirch (DE)
(72) Erfinder: Hörsch, Ingolf, 79102, Freiburg (DE); Jaegle, Stefan, 79211, Denzlingen (DE); Meier, Rolf, 77955, Ettenheim (DE); Merettig, Gerhard, 79350, Sexau (DE); Fortenbacher, Philipp, 79194, Gundelfingen (DE); Lang, Felix, 79418, Schliengen (DE); Schulz, Thomas, 79183, Waldkirch (DE)
(74) Vertreter: Ludewigt, Christoph

(56) Entgegenhaltungen:
- WO-A1-00/48934
- DE-A1- 19 627 083
- US-A1- 2004 042 010
- US-A1- 2004 070 751
- US-B1- 6 946 643

## Beschreibung

Die vorliegende Erfindung betrifft eine Lichtschranke zur Detektion eines Objektes gemäß dem Oberbegriff des Anspruchs 1.

Es ist bekannt, dass auf einer Seite einer Fördereinrichtung ein Sensor angeordnet ist, wobei dieser wenigstens einen Lichtsender zum Aussenden eines Lichtbündels in Richtung der Fördereinrichtung und wenigstens einen Lichtempfänger zum Empfang eines Lichtbündels aus der Richtung der Fördereinrichtung sowie eine Auswerteeinrichtung zur Auswertung des vom Lichtempfänger erfassten Lichtbündels aufweist. Auf der dem Sensor gegenüberliegenden Seite der Fördereinrichtung ist zur Reflexion des ausgesendeten Lichtbündels ein Retroreflektor angeordnet. Wenn das ausgesandte Lichtbündel des Sensors den Retroreflektor trifft, wird zumindest ein Teil des Lichtbündels in seine Ausgangsrichtung zurückgesandt und vom Lichtempfänger im Sensor erfasst.

Auf diesem Wege ist quer zur Transportrichtung in der Fördereinrichtung eine optoelektronische Sensoreinrichtung angeordnet. Wird ein Objekt mit der Fördereinrichtung in das Lichtbündel der optoelektronischen Sensoreinrichtung hinein bewegt, so wird der Weg des Lichtbündels vom Lichtsender zum Lichtempfänger unterbrochen, d. h. der Sensor kann erkennen, dass sich das Objekt an der Stelle innerhalb der Fördereinrichtung befindet, an der das wirksame Lichtbündel des Sensors die Fördereinrichtung im ungestörten Fall überquert. Mit diesem Erkennen der Lichtbündelunterbrechung löst der Sensor ein Schaltsignal aus, das zur Durchführung unterschiedlicher Aktionen, wie zum Beispiel dem Ausgeben eines Meldesignals, einer mechanischen Weichenstellung, einer Gewichtserfassung oder dergleichen verwendet werden kann.

Eine besondere Anforderung bei der Erfassung eines geförderten Objektes innerhalb einer Fördereinrichtung ist es, dass der geometrische Erfassungsort des Objektes oft präzise festgelegt sein muss. Dieser Forderung nach einem präzisen Erfassungsort steht nachteilig entgegen, dass ein optischer Sensor diesbezüglich in der Regel eine Toleranzzone aufweist, die der Ausdehnung des wirksamen Lichtbündelquerschnitts in Transportrichtung entspricht. Dies lässt sich dadurch erklären, dass beispielsweise ein neuer Sensor mit einem hochwertigen Retroreflektor, insbesondere dann, wenn diese nur in einem geringen Abstand voneinander entfernt eingesetzt sind und keinerlei Verschmutzung an den entsprechenden Grenzflächen aufweisen, erst dann ein Schaltsignal im Sensor auslösen, wenn das Objekt den Lichtbündelquerschnitt vollständig oder nahezu vollständig abdeckt. Im Gegensatz dazu kann beispielsweise ein Sensor mit einem in großer Entfernung angebrachten Retroreflektor, insbesondere dann, wenn die optischen Grenzflächen zusätzlich eine starke Verschmutzung aufweisen, bereits dann ein Schaltsignal im Sensor auslösen, wenn das Objekt von dem Lichtbündelquerschnitt nur einen geringen Teilquerschnitt abdeckt. Aus diesem Grunde wird bei den bekannten Sensoren oft der Lichtbündelquerschnitt des Sensors, zumindest in der Ausdehnung, die der Transportrichtung zugeordnet ist, sehr klein gehalten.

Dies wird beispielsweise dadurch erreicht, dass der Lichtbündelquerschnitt sowohl beim Lichtaustritt und beim Lichteintritt am Sensor klein gehalten ist und dass mittels einer entsprechenden Sende- und Empfangsoptik im Sensor der Verlauf des Lichtbündelquerschnittes über der Fördereinrichtung und auf dem Retroreflektor eng begrenzt wird. Damit wird zwangsweise die durch den Lichtbündelquerschnitt hervorgerufene geometrische Toleranzzone deutlich eingeschränkt. Mit anderen Worten: je feiner der optisch wirksame Lichtbündelquerschnitt ist, desto präziser ist der geometrische Erfassungsort des Objektes in der Fördereinrichtung festgelegt. Diese Maßnahme der Einschränkung des Lichtbündelquerschnitts hat jedoch den Nachteil, dass die Justage des Sensors zu dem gegenüberliegenden Retroreflektor aufwendig ist und zwangsweise nicht nur einen hohen Montagezeitaufwand zur Folge hat, sondern dass meist auch ein entsprechender mechanischer Aufwand in Form einer justierbaren Haltevorrichtung notwendig ist. Dabei muss diese justierbare Haltevorrichtung auch in der Lage sein, selbst unter rauen Umwelteinflüssen, d. h. bei Schock- und/oder Vibrationsbelastung den durchgeführten Justagezustand über einen langen Zeitraum stabil zu halten.

Aus der US 2004/0070751 A1 ist eine optoelektronische Pressenabsicherung bekannt, bei der auf einer Seite eines Gefahrenbereichs ein Sensor mit Lichtquelle und Lichtempfänger angeordnet ist und auf der anderen Seite des Gefahrenbereichs ein Reflektor, der von dem Lichtbündel der Lichtquelle überstrahlt wird.

Aus der WO 00/48934 A1 ist ein optoelektronischer Fadensensor bekannt, dessen Licht von einem Reflektor, der in einer Applikation auch gekrümmt sein kann, zurückgeworfen wird.

Aus der US 6,946,643 B1 ist eine Reflexionslichtschranke bekannt, bei der dem eine Lichtquelle und einen Lichtempfänger aufweisende Sensorteil ein Reflektor gegenüberliegend angeordnet ist.

Der Erfindung liegt die Aufgabe zugrunde, eine verbesserte Lichtschranke zu schaffen, die mit geringem Montage- und Justageaufwand eine exakte Positionsbestimmung des Objektes in der Fördereinrichtung liefert.

Diese Aufgabe wird mit einer Lichtschranke mit den Merkmalen des Anspruchs 1 gelöst.

Die erfindungsgemäße Lichtschranke zur Detektion eines einen Lichtstrahl der Lichtschranke unterbrechenden Objektes umfasst einen Sensor mit wenigstens einem Lichtsender zum Aussenden eines Lichtbündels in Richtung eines Reflektors, wenigstens einen Lichtempfänger zum Empfang eines reflektierten Teils des Lichtbündels sowie eine Auswerteeinrichtung zum Auswerten des vom Lichtempfänger erfassten, reflektierten Lichtbündels. Erfindungsgemäß ist der Reflektor als zylindrische Reflektorsäule ausgebildet, die mehrere zur Außenfläche ausgerichtete retroreflektierende Elemente besitzt, wobei der Durchmesser der Reflektorsäule deutlich kleiner als die Ausdehnung des Lichtbündels senkrecht zur Zylinderachse ist, so dass sich zwischen dem Sensor und der Reflektorsäule ein optisch wirksamer Detektionslichtstrahl bildet, dessen Querschnitt am Sensor durch den Lichtsender und eine Sendeoptik und in unmittelbarer Nähe zur Reflektorsäule von der Flächenüberschneidung des Lichtbündels mit der Reflektorsäule bestimmt ist.

Ein wesentlicher Vorteil der Erfindung besteht somit darin, dass die Position des wirksamen Detektionslichtstrahls zwischen dem Sensor und der Reflektorsäule nur durch den Standort des Sensors und der Reflektorsäule in der Fördereinrichtung festgelegt ist und damit in weiten Grenzen unabhängig von der optischen Ausrichtung des Sensors beziehungsweise der Reflektorsäule ist. Aufwändige Justierhalterungen zur exakten optischen Ausrichtung des Sensors und der Reflektorsäule sind somit mit der Erfindung nicht mehr notwendig. Darüber hinaus ist die Position des Detektionslichtstrahls selbst dann in einer stabilen Zuordnung, wenn die Sensoreinrichtung einer möglichen Schock- oder Vibrationsbeanspruchung ausgesetzt wird und sich dadurch die optische Ausrichtung des Sensors und/oder der Reflektorsäule geringfügig verändern würde.

Mit besonderem Vorteil ist die Lichtschranke an einer Fördereinrichtung angeordnet und dient zur Detektion von in eine Transportrichtung geförderter Objekte, wobei auf einer Seite der Fördereinrichtung der Sensor und auf der dem Sensor gegenüberliegenden Seite der Fördereinrichtung die Reflektorsäule angeordnet ist. Dann ist die lange Achse des Lichtbündelquerschnittes in Transportrichtung und die kurze Achse senkrecht zur Transportrichtung ausgerichtet. Die Achse der zylindrischen Reflektorsäule ist dann senkrecht zur Transportrichtung der Objekte ausgerichtet.

Da die lange Achse des Lichtbündelquerschnittes senkrecht zur Zylinderachse ausgerichtet ist, wird die Reflektorsäule in Transportrichtung von dem Lichtbündelquerschnitt deutlich überstrahlt. Dies hat zur Folge, dass aus dem langgestreckten Lichtbündel ein für die Funktion der optoelektronischen Sensoreinrichtung wirksamer Detektionslichtstrahl heraus gebildet wird, der exakt zwischen dem Sensor und der Reflektorsäule positioniert ist.

Dabei ist die Reflektorsäule vorzugsweise über den gesamten Umfang ihres Zylindermantels mit mehreren retroreflektierenden Elementen ausgestattet, so dass die Reflektorsäule unabhängig von der Drehwinkellage ihrer Zylinderachse angeordnet werden kann.

Es ist vorgesehen, dass die Reflektorsäule eine, an die Struktur der retroreflektierenden Elemente angepasste regelmäßige oder unregelmäßige Vieleckquerschnittsfläche aufweist. Dadurch wird den retroreflektierenden Elementen in der Reflektorsäule an deren Oberfläche keine zusätzliche optische Zylinderlinsenwirkung überlagert, die sich in Form einer Fokussierung oder Aufstreuung des reflektierten Lichtstrahles auswirken würde. Dies ist insbesondere dann von Vorteil, wenn große Reichweiten oder unterschiedliche Reichweitenbereiche zwischen dem Sensor und der Reflektorsäule überbrückt werden sollen.

Bevorzugt weist das Lichtbündel eine elliptische oder rechteckige Querschnittsform auf, deren lange Achse senkrecht zur Zylinderachse und deren kurze Achse parallel zur Zylinderachse ausgerichtet sind.

In einer Ausführungsform der Erfindung ist vorgesehen, dass die Reflektorsäule sowohl in Querrichtung als auch in Richtung der Zylinderachse deutlich kleiner ist als die Ausdehnungen des Lichtbündels am Ort der Reflektorsäule, so dass sich zwischen dem Sensor und der Reflektorsäule ein optisch wirksamer Detektionslichtstrahl bildet, dessen Querschnitt in unmittelbarer Nähe zur Reflektorsäule von der wirksamen Größe der Reflektorsäule bestimmt ist. In diesem Fall wird sich für die Funktion der optoelektronischen Sensoreinrichtung ebenfalls ein wirksamer Detektionslichtstrahl heraus bilden, der exakt zwischen dem Sensor und der Reflektorsäule positioniert ist. Eine optische Ausrichtung des Sensors beziehungsweise der Reflektorsäule, d. h. eine aufwendige Justierhalterung zur exakten optischen Ausrichtung des Sensors und der Reflektorsäule sind somit auch bei dieser Ausführungsform der Erfindung nicht notwendig. Das Lichtbündel kann in dieser Ausführungsform in einfacher Weise eine etwa runde oder quadratische Querschnittsform aufweisen, wobei trotzdem sich der vorerwähnte wirksame Detektionsquerschnitt durch die Reflexion an der Reflektorsäule herausbildet.

In einer zweckmäßigen Ausführungsform ist es vorgesehen, dass die Außenfläche der Reflektorsäule eine transparente zylindrische Oberflächenform aufweist, so dass die Lichteintritts- und die Lichtaustrittsfläche der retroreflektierenden Elemente in der Reflektorsäule die Ausprägung einer optisch wirksamen Zylinderlinse aufweisen. Damit wird in vorteilhafter Weise erreicht, dass das an den retroreflektierenden Elementen der Reflektorsäule reflektierte Licht in Abhängigkeit vom Außendurchmesser der Reflektorsäule, durch die überlagerte Zylinderlinsenwirkung in seiner Rückstrahlrichtung veränderbar ist. Dies kann beispielsweise dann, wenn der Sensor zur Teilung des Sende- und Empfangsstrahles eine Pupillenteilung aufweist, die Effektivität der Lichtübertragung vom Lichtsender zum Lichtempfänger verbessern.

In einer vorteilhaften Ausbildung ist vorgesehen, dass die Reflektorsäule zur Aufnahme weiterer Komponenten der Sensoreinrichtung als ein Hohlzylinder ausgeführt ist. Der Innenraum der Reflektorsäule kann somit gleichzeitig als Tragkörper für zusätzliche elektronische und/oder optische Komponenten genutzt werden. Damit kann beispielsweise eine Betriebszustandsanzeige, eine Anzeige zur Signalrückmeldung, eine Reflektorkodierung und dergleichen im Innenraum der Reflektorsäule eingebaut werden. Dies ist besonders dann von Vorteil, wenn zum Beispiel aufgrund baulicher Gegebenheiten nur der optische Blickkontakt zur Reflektorsäule, nicht aber zum optoelektronischen Sensor möglich ist.

In einer Weiterbildung des Erfindungsgedankens ist vorgesehen, dass die Reflektorsäule in wenigstens einer Stirnfläche eine Schraub- oder Klemmbefestigung zur Montage der Reflektorsäule aufweist. Da die erfindungsgemäße Reflektorsäule in beliebiger Drehlage um die Zylinderachse eingesetzt werden kann, ist die Befestigung der Reflektorsäule innerhalb der Fördereinrichtung mit geringem Aufwand und ohne aufwendige optische Justage möglich. Dies erweist sich besonders dann als vorteilhaft, wenn die Fördereinrichtung zur Durchführung unterschiedlicher Aufgaben ggf. häufig neu konfiguriert werden muss.

Die Erfindung wird im Folgenden anhand eines Ausführungsbeispiels unter Bezugnahme auf die Zeichnung beschrieben. In der Zeichnung zeigen:
- Fig. 1: eine schematische Darstellung einer Fördereinrichtung mit einer opto- elektronischen Sensoreinrichtung;
- Fig. 2: eine perspektivische Darstellung einer Reflektorsäule in Form eines Hohlzylinders;
- Fig. 3: eine Draufsicht vom Ausschnitt A aus Figur 2;
- Fig. 4: eine Draufsicht auf eine Reflektorsäule mit einer regelmäßigen Vieleckquerschnittsfläche.

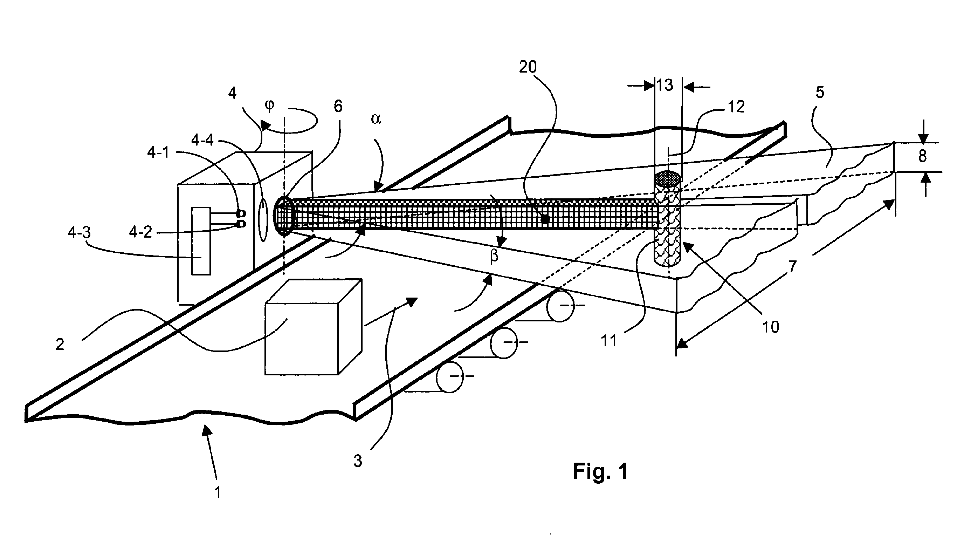

Gemäß Figur 1 befindet sich auf einer Fördereinrichtung 1 ein Objekt 2, das mittels der Fördereinrichtung 1 in eine Transportrichtung 3 bewegt wird. Auf einer Seite der Fördereinrichtung 1 ist ein optoelektronischer Sensor 4 angeordnet. Der Sensor 4 umfasst unter anderem einen Lichtsender 4-1, einen Lichtempfänger 4-2, eine Sende- und eine Empfangsoptik 4-4 sowie eine Auswerteeinheit 4-3. Zur besseren Übersicht sind diese im Sensor 4 enthaltenen Komponenten in Figur 1 nur sehr schematisch dargestellt.

Das vom Lichtsender emittierte Licht wird mit Hilfe der im Sensor 4 eingebauten Sendeoptik 4-4 derart geformt, dass es als ein Lichtbündel 5 aus einem Sensorfenster 6 des Sensors 4 aus dem Sensor 4 in Richtung der Fördereinrichtung 1 austritt. Wie aus Figur 1 ersichtlich, hat das Lichtbündel 5 in der Ebene der Transportrichtung 3 einen Horizontalöffnungswinkel α und rechtwinklig zur Transportrichtung 3 einen Vertikalöffnungswinkel β. Da der Horizontalöffnungswinkel α deutlich größer als der Vertikalöffnungswinkel β ist, nimmt der Querschnitt des Lichtbündels 5 mit zunehmendem Abstand von dem Sensor 4 eine im Wesentlichen rechteckige Kontur ein. Der Querschnitt des Lichtbündels 5 besitzt somit eine lange Achse 7 und eine kurze Achse 8.

Auf der dem optoelektronischen Sensor 4 gegenüber liegenden Seite der Fördereinrichtung 1 ist eine zylindrische Reflektorsäule 10 angeordnet. An der Außenfläche der Reflektorsäule 10 sind vorzugsweise rundum mehrere retroreflektierende Elemente 11 angebracht, die das auf sie auftreffende Licht wieder in die Richtung des Lichteinfalls zurück werfen. Die zylindrische Reflektorsäule 10 hat eine Zylinderachse 12 und einen Zylinderdurchmesser 13. Die Zylinderachse 12 der Reflektorsäule 10 ist dabei in etwa parallel zur kurzen Achse 8 des Lichtbündels 5 angeordnet.

Wie weiterhin aus Figur 1 ersichtlich, ist die Zylinderlänge der Reflektorsäule 10 deutlich größer als die kurze Achse 8 des Lichtbündels 5, gleichzeitig aber ist der Durchmesser 13 der Reflektorsäule 10 wesentlich kleiner als die lange Achse 7 des Lichtbündels 5. Dies hat zur Folge, dass nur ein kleiner Ausschnitt von dem Lichtbündel 5 auf die Reflektorsäule 10 fällt und dabei von den retroreflektierenden Elementen 11 der Reflektorsäule 10 zum Sensor 4 zurückgeworfen wird. Damit wird ein Detektionslichtstrahl 20 erzeugt, dessen Querschnitt am Sensor 4 durch den Lichtsender 4-1 und die Sendeoptik 4-4 und gegebenenfalls auch durch die Größe des Sensorfensters 6 begrenzt ist und an der Reflektorsäule 10 von dessen Zylinderdurchmesser 13 und der kurzen Achse 8 des Lichtbündels 5 vorgegeben wird.

Wird das Objekt 2 mit der Fördereinrichtung 1 in die Transportrichtung 3 bewegt, so wird der Sensor 4 erst dann einen Schaltvorgang auslösen, wenn der Detektionslichtstrahl 20 vom Objekt 2 unterbrochen wird. Entscheidend ist in diesem Zusammenhang die Situation, dass die geometrische Zuordnung des Detektionslichtstrahls 20 zur Fördereinrichtung 1 allein durch den Ort des Sensors 4 und der Reflektorsäule 10 exakt positioniert ist. Ein Verdrehen des Sensors 4 um einen Drehwinkel ϕ hat somit keine Auswirkung auf die geometrische Zuordnung des Detektionslichtstrahls 20 zur Fördereinrichtung 1. Auch die Funktionsbereitschaft der Sensoreinrichtung wird durch eine Veränderung des Drehwinkels ϕ solange nicht beeinträchtigt, solange die Reflektorsäule 10 sich noch innerhalb des Lichtbündels 5 befindet. Gleichermaßen ist auch die Ausrichtung der Reflektorsäule 10 um deren Zylinderachse 12 nicht erforderlich, d. h. die Zuordnung des Detektionslichtstrahls 20 zur Fördereinrichtung 1 wird auch davon nicht beeinflusst.

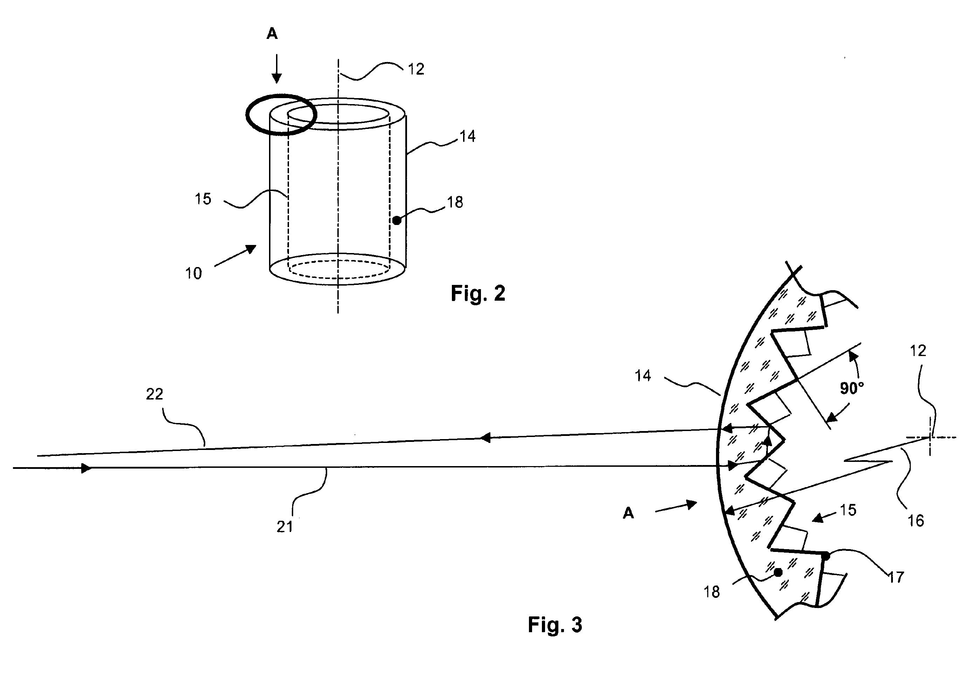

In Figur 2 ist eine perspektivische Darstellung der Reflektorsäule 10 zu sehen. Aus dieser schematischen Ansicht ist zu erkennen, dass diese Ausführungsvariante der Reflektorsäule 10, einem aus einem optisch transparenten Werkstoff 18 hergestellten Hohlzylinder entspricht, der an seiner äußeren Mantelfläche 14 eine zylindrische Form aufweist. Die spezielle, geometrische Ausführungsform der Innenwandung 15 des Hohlzylinders soll anhand von Figur 3 im Detail erläutert werden.

Zu diesem Zweck ist in Figur 3 der in Figur 2 gekennzeichnete Ausschnitt A vergrößert dargestellt, wobei als Blickrichtung die Form der Draufsicht gewählt wurde. Dabei ist sowohl die äußere Mantelfläche 14 und insbesondere die Innenwandung 15 des Hohlzylinders zu erkennen. Die äußere Mantelfläche 14 ist in einem Radius 16 kreisförmig um die Zylinderachse 12 angeordnet. Die Innenwandung 15 des Hohlzylinders dagegen weist bei der hier dargestellten Ausführungsvariante der Reflektorsäule 10 ein hexagonales Array von kleinen Würfelecken auf. Diese Würfelecken haben, wie dies auch bei einem flachen Tripelreflektor der Fall ist, die Funktion von einem retroreflektierenden Element 17. Aufgrund dieser Ausführungsform der Innenwandung 15 hat die Wandung des Hohlzylinders der Reflektorsäule 10 die Funktion eines kreisförmig gebogenen Retroreflektors. Trifft nun ein einfallender Lichtstrahl 21 über die äußere Mantelfläche 14 in die Wandung des Hohlzylinders und somit auf ein retroreflektierendes Element 17, so wird dieser aufgrund von mehrfachen Reflexionen beziehungsweise Totalreflexionen wieder aus der Mantelfläche 14 als ein reflektierter Lichtstrahl 22 austreten. Im Gegensatz zu einem nicht gebogenen Retroreflektor verlaufen jedoch aufgrund der gebogenen äußeren Mantelfläche 14 der einfallende Lichtstrahl 21 und der reflektierte Lichtstrahl 22 nicht exakt parallel gegeneinander, sondern besitzen in Abhängigkeit vom Radius 16 und der Brechzahl des optisch transparenten Werkstoffs 18 eine gewisse Konvergenz zueinander. Diese Konvergenz zwischen dem einfallenden Lichtstrahl 21 und dem reflektierten Lichtstrahl 22 ist jedoch nur in der hier dargestellten Zeichenebene vorhanden.

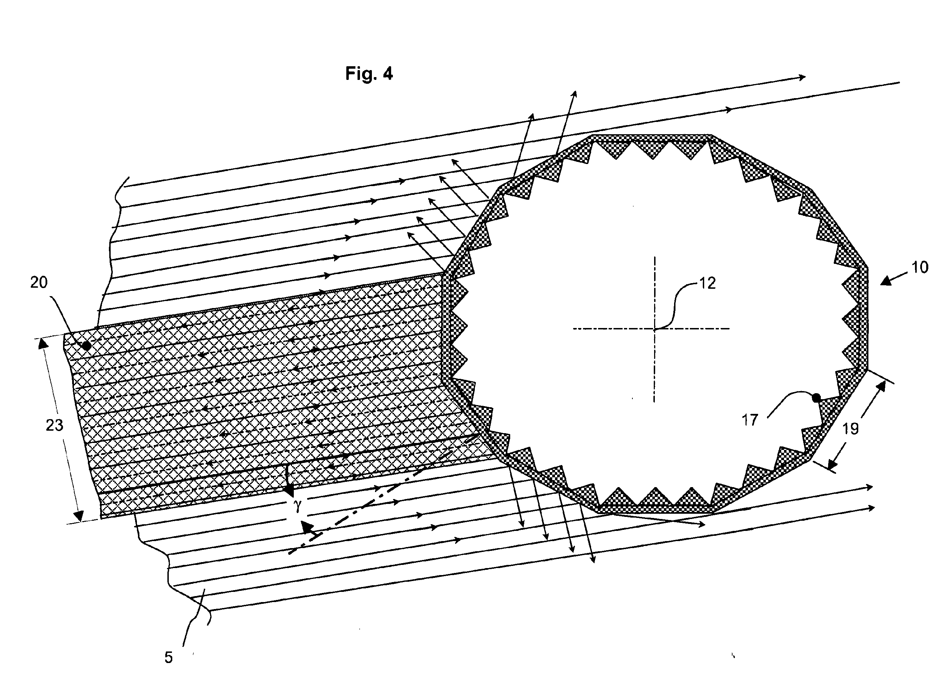

Bei der in Figur 4 dargestellten Ausführungsvariante der Reflektorsäule 10 hat die Grundfläche der Reflektorsäule 10 die Form eines regelmäßigen Zwölfecks. Dabei ist die Größe einer einzelnen Sehne 19 so gewählt, dass diese exakt der Breite von 3 benachbarten retroreflektierenden Elementen 17 entspricht. Es ist natürlich genauso möglich, die Reflektorsäule 10 in einer anderen Vieleckvariante und dementsprechender Anzahl retroreflektierender Elemente 17 auszuführen. Der entscheidende Unterschied zu der in Figur 2 und 3 gezeigten Reflektorsäule 10 ist bei der Ausführung nach Figur 4 darin zu sehen, dass die retroreflektierenden Elemente 17 mit einer ebenen Lichteintrittsfläche nach außen abgeschlossen sind. Damit wird eine Konvergenz/Divergenz zwischen den einfallenden Lichtstrahlen und den reflektierten Lichtstrahlen ausgeschlossen. Weiterhin ist aus der Darstellung von Figur 4 zu entnehmen, dass die Detektionslichtstrahlbreite 23 geringer als der Außendurchmesser der Reflektorsäule 10 ist. Dies hat seinen Grund darin, dass von dem auf die Reflektorsäule 10 auftreffenden Lichtbündel 5 nur der Anteil als Detektionslichtstrahl 20 zurück reflektiert wird, der innerhalb eines bestimmten Akzeptanzwinkels γ auf die Reflektorsäule 10 beziehungsweise auf die retroreflektierenden Elemente 17 auftrifft. Wird dieser Akzeptanzwinkel γ überschritten, so kann der Lichtstrahl im retroreflektierenden Element 17 nicht mehr ausreichend reflektiert werden, d. h. es findet keine Retroreflektion mehr statt.

### Bezugszeichenliste

- 1: Fördereinrichtung
- 2: Objekt
- 3: Transportrichtung
- 4: Sensor mit Lichtsender 4-1, Lichtempfänger 4-2, Sendeoptik 4-4 und Auswerteeinheit 4-3
- 5: Lichtbündel
- 6: Sensorfenster
- 7: lange Achse
- 8: kurze Achse
- 10: Reflektorsäule
- 11: retroreflektierendes Element
- 12: Zylinderachse
- 13: Zylinderdurchmesser
- 14: Mantelfläche
- 15: Innenwandung
- 16: Radius
- 17: retroreflektierendes Element
- 18: transparenter Werkstoff
- 19: Sehne
- 20: Detektionslichtstrahl
- 21: einfallender Lichtstrahl
- 22: reflektierter Lichtstrahl
- 23: Detektionslichtstrahlbreite
- α: Horizontalwinkel
- β: Vertikalwinkel
- ϕ: Drehwinkel
- γ: Akzeptanzwinkel

## Patentansprüche

1. Lichtschranke zur Detektion eines einen Lichtstrahl (5) der Lichtschranke unterbrechenden Objektes (2), mit einem Sensor (4) mit wenigstens einem Lichtsender (4-1) zum Aussenden eines Lichtbündels (5) in Richtung eines Reflektors (10), wenigstens einem Lichtempfänger (4-2) zum Empfang eines reflektierten Teils des Lichtbündels sowie einer Auswerteeinrichtung (4-3) zum Auswerten des vom Lichtempfänger (4-2) erfassten, reflektierten Lichtbündels, wobei der Reflektor zumindest in einer Dimension kleiner als die Ausdehnung des Lichtbündels (5) ist, so dass sich zwischen dem Sensor (4) und dem Reflektor (10) ein optisch wirksamer Detektionslichtstrahl (20) bildet, dessen Querschnitt am Sensor (4) durch den Lichtsender (4-1) und eine Sendeoptik (4-4) und in unmittelbarer Nähe des Reflektors (10) von der Flächenüberschneidung des Lichtbündels (5) mit dem Reflektor (10) bestimmt ist, **dadurch gekennzeichnet, dass** der Reflektor (10) als zylindrische Reflektorsäule (10) ausgebildet ist, die mehrere zur Außenfläche ausgerichtete retroreflektierende Elemente (17) besitzt, wobei der Durchmesser der Reflektorsäule (10) kleiner als die Ausdehnung des Lichtbündels (5) senkrecht zur Zylinderachse ist, wobei die Reflektorsäule (10) eine an die Struktur der retroreflektierenden Elemente angepasste regelmäßige oder unregelmäßige Vieleckquerschnittsfläche aufweist.

2. Lichtschranke nach Anspruch 1, **dadurch gekennzeichnet, dass** das Lichtbündel (5) eine elliptische oder rechteckige Querschnittsform aufweist, deren lange Achse (7) senkrecht zur Zylinderachse und deren kurze Achse (8) parallel zur Zylinderachse ausgerichtet sind.

3. Lichtschranke nach Anspruch 1 oder 2, **dadurch gekennzeichnet, dass** die Reflektorsäule (10) sowohl in Querrichtung als auch in Richtung der Zylinderachse deutlich kleiner ist als die Ausdehnungen des Lichtbündels am Ort der Reflektorsäule (10), so dass sich zwischen dem Sensor (4) und der Reflektorsäule (10) ein optisch wirksamer Detektionslichtstrahl (20) bildet, dessen Querschnitt in unmittelbarer Nähe zur Reflektorsäule (10) von der wirksamen Größe der Reflektorsäule bestimmt ist.

4. Lichtschranke nach Anspruch 3, **dadurch gekennzeichnet, dass** das Lichtbündel (5) eine runde oder quadratische Querschnittsform aufweist.

5. Lichtschranke nach einem der vorhergehenden Ansprüche, **dadurch gekennzeichnet, dass** die Außenfläche der Reflektorsäule eine transparente zylindrische Oberfläche aufweist, so dass eine Lichteintritts- und eine Lichtaustrittsfläche der retroreflektierenden Elemente in der Reflektorsäule eine optisch wirksame Zylinderform inne haben.

6. Lichtschranke nach einem der vorstehenden Ansprüche, **dadurch gekennzeichnet, dass** die Reflektorsäule zur Aufnahme weiterer Komponenten der Lichtschranke als ein Hohlzylinder ausgeführt ist.

7. Lichtschranke nach einem der vorstehenden Ansprüche, **dadurch gekennzeichnet, dass** diese an einer Fördereinrichtung (1) angeordnet ist zur Detektion von in eine Transportrichtung (3) geförderter Objekte (2), wobei auf einer Seite der Fördereinrichtung der Sensor (4) und auf der dem Sensor (4) gegenüberliegenden Seite der Fördereinrichtung (1) die Reflektorsäule (10) angeordnet ist.

8. Lichtschranke nach Anspruch 7, **dadurch gekennzeichnet, dass** die Reflektorsäule in wenigstens einer Stirnfläche eine Schraub- oder Klemmbefestigung zur Montage der Reflektorsäule an der Fördereinrichtung aufweist.

## Claims

1. A light barrier for the detection of an object (2) which interrupts a beam of light (5) of the light barrier, having a sensor (4) with at least one light transmitter (4-1) for the transmission of a light beam (5) in the direction of a reflector (10); at least one light receiver (4-2) for the reception of a reflected portion of the light beam; and an evaluation unit (4-3) for the evaluation of the reflected light beam detected by the light receiver (4-2), with the reflector being smaller than the extent of the light beam (5) at least in one dimension so that an optically effective detection beam of light (20) is formed between the sensor (4) and the reflector (10) whose cross-section at the sensor (4) is determined by the light transmitter (4-1) and by an optical transmission device (4-4) and by the areal overlap of the light beam (5) with the reflector (10) in direct proximity to the reflector (10), **characterized in that** the reflector (10) is made as a cylindrical reflector column (10) which has a plurality of retroreflecting elements (17) aligned toward the outer surface, with the diameter of the reflector column (10) being smaller than the extent of the light beam (5) perpendicular to the cylinder axis with the reflector column (10) having a regular or unregular polygonal cross sectional area matched to the structure of the retroreflecting elements.

2. A light barrier in accordance with claim 1, **characterized in that** the light beam (5) has an elliptical or rectangular cross-sectional form whose long axis (7) is aligned perpendicular to the cylinder axis and whose short axis (8) is aligned parallel to the cylinder axis.

3. A light barrier in accordance with claim 1 or claim 2, **characterized in that** the reflector column (10) is considerably smaller, both in the transverse direction and in the direction of the cylinder axis, than the extents of the light beam at the location of the reflector column (10) so that an optically effective detection beam of light (20) is formed between the sensor (4) and the reflector column (10) whose cross-section in direct proximity to the reflector column (10) is determined by the effective size of the reflector column.

4. A light barrier in accordance with claim 3, **characterized in that** the light beam (5) has an approximately round or square cross-sectional form.

5. A light barrier in accordance with any one of the preceding claims, **characterized in that** the outer surface of the reflector column has a transparent cylindrical surface so that the light entry surface and the light exit surface of the retroreflecting elements have an optically effective cylindrical shape in the reflector column.

6. A light barrier in accordance with any one of the preceding claims, **characterized in that** the reflector column is made as a hollow cylinder for the reception of further components of the light barrier.

7. A light barrier in accordance with any one of the preceding claims, **characterized in that** it is arranged at a conveying device (1) for the detection of objects (2) conveyed in a transport direction (3), with the sensor (4) being arranged on one side of the conveying device and the reflector column (10) being arranged on the side of the conveying device (1) disposed opposite the sensor (4).

8. A light grid in accordance with claim 7, **characterized in that** the reflector column has a screw fastening or a clamping fastening in at least one end surface for the installation of the reflector column at the conveying device.

## Revendications

1. Barrière lumineuse pour la détection d'un objet (2) qui interrompt un rayon lumineux (5) de la barrière lumineuse, comprenant un capteur (4) avec au moins un émetteur de lumière (4-1) pour émettre un faisceau lumineux (5) en direction d'un réflecteur (10), au moins un récepteur de lumière (4-2) pour la réception d'une partie réfléchie du faisceau lumineux, ainsi qu'une unité d'évaluation (4-3) pour évaluer le faisceau lumineux réfléchi capté par le récepteur de lumière (4-2), dans laquelle le réflecteur est, au moins dans une dimension, plus petit que l'extension du faisceau lumineux (5), de sorte qu'il se forme entre le capteur (4) et le réflecteur (10) un rayon lumineux de détection (20) efficace sur le plan optique, dont la section transversale au niveau du capteur (4) est déterminée par l'émetteur de lumière (4-1) et une optique d'émission (4-4), et au voisinage immédiat du réflecteur (10) par l'intersection de surface du faisceau lumineux (5) avec le réflecteur (10),
**caractérisée en ce que** le réflecteur (10) est réalisé sous la forme d'une colonne de réflecteur cylindrique (10), qui possède plusieurs éléments rétroréflecteurs (17) dirigés vers la surface extérieure, dans laquelle le diamètre de la colonne de réflecteur (10) est plus petit que l'extension du faisceau lumineux (5) perpendiculairement à l'axe du cylindre, et dans laquelle la colonne de réflecteur (10) présente une surface de section transversale polygonale régulière ou irrégulière adaptée à la structure des éléments rétroréflecteurs.

2. Barrière lumineuse selon la revendication 1, **caractérisée en ce que** le faisceau lumineux (5) présente une forme de section transversale elliptique ou rectangulaire, dont le grand axe (7) est orienté perpendiculairement à l'axe du cylindre et dont le petit axe (8) est orienté parallèlement à l'axe du cylindre.

3. Barrière lumineuse selon la revendication 1 ou 2, **caractérisée en ce que** la colonne de réflecteur (10) est, aussi bien en direction transversale qu'en direction de l'axe du cylindre, nettement plus petite que les extensions du faisceau lumineux au lieu de la colonne de réflecteur (10), de sorte qu'il se forme entre le capteur (4) et la colonne de réflecteur (10) un rayon lumineux de détection (20) efficace sur le plan optique, dont la section transversale est déterminée, au voisinage immédiat de la colonne de réflexion (10), par la taille effective de la colonne de réflecteur.

4. Barrière lumineuse selon la revendication 3, **caractérisée en ce que** le faisceau lumineux (5) présente une forme de section transversale ronde ou carrée.

5. Barrière lumineuse selon l'une des revendications précédentes, **caractérisée en ce que** la surface extérieure de la colonne de réflecteur présente une surface cylindrique transparente, de sorte qu'une surface d'entrée de lumière et une surface de sortie de lumière des éléments rétroréflecteurs dans la colonne de réflecteur possèdent une forme cylindrique efficace sur le plan optique.

6. Barrière lumineuse selon l'une des revendications précédentes, **caractérisée en ce que** la colonne de réflecteur est réalisée sous forme d'un cylindre creux pour recevoir d'autres composants de la barrière lumineuse.

7. Barrière lumineuse selon l'une des revendications précédentes, **caractérisée en ce que** celle-ci est agencée sur un système de convoyage (1) pour la détection d'objets (2) convoyés dans une direction de transport (3), de sorte que le capteur (4) est agencé sur un côté du système de convoyage et la colonne de réflecteur (10) est agencée sur le côté du système de convoyage (1) opposé au capteur (4).

8. Barrière lumineuse selon la revendication 7, **caractérisée en ce que** la colonne de réflecteur présente, dans au moins une face frontale, une fixation à vis ou à serrage pour le montage de la colonne de réflecteur sur le système de convoyage.
